# EUROPEAN PATENT APPLICATION

(11) **EP 4 101 614 A1**
(43) Date of publication of application: **14.12.2022**
(21) Application number: 22382531.6
(22) Date of filing: 01.06.2022
(51) Int. Cl.: B29B 17/00, B29C 43/20, B29B 17/04

(54) **METHOD FOR OBTAINING A PANEL FROM RECYCLED MATERIAL, AND THE RESULTING PANEL**

(30) Priority: 10.06.2021 ES 202130537
(71) Applicant: Liderkit SL, 23210 Guarroman (Jaén) (ES)
(72) Inventor: DIA, FRANCISCO DE BORJA, 23210 GUARROMAN (ES); PERAGON, ORTEGA, 23210 GUARROMAN (ES)
(74) Representative: Aguilar Catalán, Blanca

(57) **Abstract**

The purpose of the method is to be able to recycle commonly surplus materials in industry, such as wood, aluminium, polystyrene or polyethylene, to obtain a cost-effective, functional panel. The materials are therefore reduced to a fraction of less than 4 mm before being mixed with a binder so that they can be used to obtain the core of a panel that is obtained by pressing. This involves the inclusion of the glassfibre-reinforced polyester sheet with a photoactive coating in contact with the top and bottom plate of the press, between which the mixture of materials and the binder is added. Once the panel has been pressed and polymer curing time is complete, a cost-effective panel suitable for a wide range of applications is obtained.

## Description

### TECHNICAL AREA

This invention relates to a method used to obtain a sandwich panel with a core of recycled material and sides of glassfibre-reinforced polyester.

The purpose of the invention is, therefore, to offer a method through which to recycle waste, such as wood, polystyrene, polyurethane and aluminium, to obtain a cost-effective, lightweight panel that is suitable for multiple applications.

### BACKGROUND OF THE INVENTION

Although sandwich panels with a core of recycled materials such as wood, cardboard or paper are known, there is no known method or procedure through which panels can be obtained to recycle additional materials, such as aluminium, polystyrene and polyethylene.

### EXPLANATION OF THE INVENTION

The recommended method is to fill the technical vacuum described above using a simple yet effective solution.

The method of the invention therefore involves obtaining a sandwich panel in which the core is made from recycled materials and the sides are made from glassfibre-reinforced polyester.

More specifically, the method begins with an initial phase of reducing the production-derived waste, i.e. wood, aluminium, polystyrene and polyethylene, to a fraction of less than 4 mm.

This waste is then subjected to a mixing and homogenising phase.

A binder is then added, and, in the case of polystyrene, the binder is a two-component ultra-high-density polyurethane. If polystyrene is not used, the binder will be a polyester resin. Epoxy resins and vinyl ester may also be added.

At a later stage, the mixture and the binder are homogenised, and then a sheet of glassfibre-reinforced polyester is placed in a press mould, with a photoactive coating in contact with the bottom plate of the press. This will be one of the outer layers of the panel, and the aforementioned mixture is then added to this mould. This sheet may also be non-photoactive.

The other outer layer is then placed on top of the added mixture before the entire unit is pressed.

To do so, the necessary time will be allowed for polymer curing, using manufacturing temperatures that may vary between 15° and 40°.

Binder volume will range from 40% to 5% of the core volume, while the volume of the core or recycled material may range from 60% to 95% of the panel total.

### DESCRIPTION OF THE DRAWINGS

To complete the description provided below and provide a better understanding of the characteristics of the invention, in line with a preferential example of a practical embodiment thereof, a set of drawings are attached as an integral part of this description that include but are not limited to:

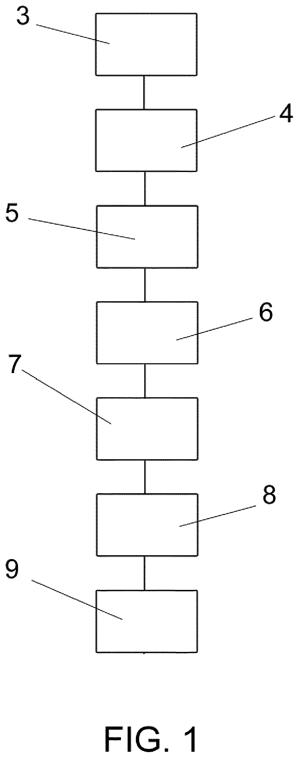

Figure 1.- Shows a block diagram of the various operational phases of the method of the invention.

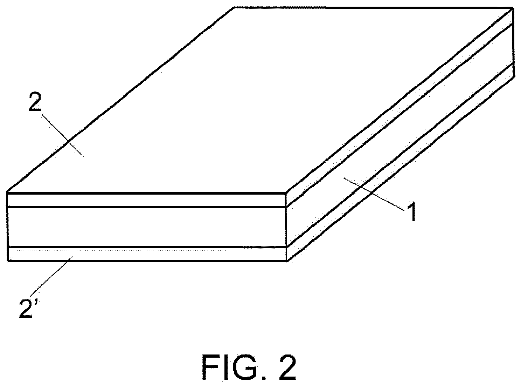

Figure 2.- Shows a perspective view of a panel of recycled material made in line with the object of this invention.

### PREFERENTIAL EMBODIMENT OF THE INVENTION

In view of the figure indicated, it can be seen how the invention takes advantage of the most common industrial waste materials, such as wood, aluminium, polystyrene and polyethylene waste, to obtain the core (1) of a cost-effective, functional sandwich panel involving two outer layers (2-2') of glassfibre-reinforced polyester.

An initial phase is therefore defined in which the aforementioned production waste, namely wood, aluminium, polystyrene or polyethylene, is reduced (3) to a fraction of less than 4 mm.

Once the waste is the appropriate size, it is subjected to a mixing (4) and homogenising phase.

A binder (5) is then added, which will vary depending on the type of waste used. In the case of polystyrene, the binder will be ultra-high-density, two-component polyurethane, whereas when polystyrene is not used, the binder will be a polyester resin.

The mixture with the binder is then subjected to a new homogenising phase (6).

A sheet forming the outer (2') glassfibre-reinforced polyester layer is placed on a press mould (7), with a photoactive coating on the bottom plate of the press. This will be one of the outer layers of the panel.

The mixture obtained during the homogenising phase (6), which will form the core (1), is then added (8) to the mould.

The sheet forming the outer glassfibre-reinforced polyester layer (2) is then placed on top, with a photoactive coating in contact with the top plate of the press (9) on top of the added mixture, and the entire unit is pressed accordingly for a pre-set time corresponding to polymer curing time, at a temperature of between 15° and 40°.

Lastly, as indicated above, the volume of binder may range from 40% to 5%, while the volume of the core or recycled material may range from 60% to 95% of the total panel.

By way of example, the precise proportions of the components described above are given below for a panel made in line with the object of the invention:

| | |
|---|---|
| • Binder | 10% |
| • Thermoplastic elastomer polyurethane | 30% |
| • Extruded polystyrene | 50% |
| • Polyester | 5% |
| • Wood | 5% |

## Claims

1. Method for obtaining a recycled panel, **characterised by** its following operational phases:
a) Reduction (3) of production waste, namely wood, aluminium, polystyrene or polyethylene, to a fraction of less than 4 mm.
b) Mixing (4) and homogenising of this waste.
c) Addition of a binder (5),
d) Homogenising (6) of the mixture and the binder.
e) Placing (7) a sheet of glassfibre-reinforced polyester on a press mould with a photoactive coating in contact with the bottom plate of the press.
f) Addition (8) of the mixture obtained during the homogenising phase (6) to the mould.
g) Placing (9) a sheet of glassfibre-reinforced polyester on top of the mixture added in the previous stage.
h) Pressing of the unit for a pre-set time corresponding to polymer curing time, at a temperature of between 15° and 40°.

2. Method for obtaining a recycled panel, according to Claim 1, **characterised by** the fact that, when polystyrene is used to obtain the core, the binder used is ultra-high-density, two-component polyurethane.

3. Method for obtaining a recycled panel, according to Claim 1, **characterised by** the fact that, when polystyrene is not involved in the mixture of core materials, the binder used is a polyester resin.

4. Panel of recycled material, **characterised by** the fact that it involves a core (1) of recycled materials linked by a binder, such as wood, aluminium, polystyrene or polyethylene, as well as two outer layers (2-2') of glassfibre-reinforced polyester.

5. Panel of recycled material, according to Claim 4, **characterised by** the fact that the binder volume is between 40% and 5% of the core volume.

6. Panel of recycled material, according to Claim 4, **characterised by** the fact that the core volume is between 60% and 95% of the total panel.

7. Method for obtaining a recycled panel, according to Claim 1, **characterised by** the fact that epoxy resins and vinyl ester are additionally used to obtain the core.

8. Method for obtaining a recycled panel, according to Claim 1, **characterised by** the fact that the glassfibre-reinforced polyester sheet used in Stage or Phase g) has a photoactive coating on the side in contact with the top plate of the press.
